# EUROPÄISCHE PATENTSCHRIFT

(11) **EP 0 781 185 B1**
(45) Veröffentlichungstag und Bekanntmachung des Hinweises auf die Patenterteilung: **16.02.2000**
(21) Anmeldenummer: 95932709.9
(22) Anmeldetag: 11.09.1995
(51) Int. Cl.: B23K 1/00, F01N 3/28

(54) **VERFAHREN ZUR HERSTELLUNG EINER METALLISCHEN STRUKTUR**
METHOD FOR MANUFACTURING METALLIC STRUCTURES
PROCEDE DE FABRICATION DE STRUCTURES METALLIQUES

(30) Priorität: 14.09.1994 DE 4432730
(43) Veröffentlichungstag der Anmeldung: 02.07.1997
(73) Patentinhaber: Emitec Gesellschaft für Emissionstechnologie mbH, 53797 Lohmar (DE)
(72) Erfinder: WIERES, Ludwig, D-51491 Overath (DE)
(74) Vertreter: Kahlhöfer, Hermann, Dipl.-Phys.
(86) Internationale Anmeldenummer: EP9503563
(87) Internationale Veröffentlichungsnummer: WO9608336

(56) Entgegenhaltungen:
- EP-A- 0 659 480
- DE-A- 2 947 694
- DE-A- 4 019 962
- US-A- 3 769 101
- US-A- 5 192 623

## Beschreibung

Die Erfindung bezieht sich auf ein Verfahren zur Herstellung einer metallischen Struktur, insbesondere eines Wabenkörpers eines katalytisehen Konverters, vorzugsweise eines katalytischen Konverters für Abgase einer Verbrennungskraftmaschine, aus zumindest teilweise strukturierten gewickelten, verschlungenen oder geschichteten Blechlagen.

Metallische Strukturen, insbesondere Wabenkörper, aus glatten und strukturierten Blechlagen sind beispielsweise durch die DE 29 24 592 A1 und DE 36 34 235 C2 bekannt. Dabei sind glatte und gewellte Bleche stapelweise abwechselnd aufeinandergeschichtet.

Die einzelnen Blechlagen sind untereinander mindestens teilweise verlötet. Durch die DE 29 24 592 ist es bekannt, den Wabenkörper dadurch herzustellen, daß ein glattes und ein gewelltes Metallband zu mehreren Schichten aufeinandergewickelt werden, wobei zwischen die aufeinandergewickelten Schichten entweder von einer mit Walzen versehenen Auftragsvorrichtung Lotmaterial in Streifenform und auch durchgehend auf das glatte Band oder jeweils auf die äußersten Erhebungen des gewellten Bandes aufgebracht wird, das anschließend in einem Ofen im Vakuum bzw. Schutzgas zum Schmelzen gebracht wird.

Weitere Belotungsverfahren für solche Wabenkörper sind in der WO 89/11938 ausführlich beschrieben, wobei sich nach dem Stand der Technik an alle Belotungsverfahren ein Lötprozeß in einem Lötofen anschließt. Ein solcher Lötprozeß erfolgt meist unter Vakuum, wobei bisher wegen des Zeitaufwandes (z.B. 6 Stunden) für die Erzeugung des Vakuums und die Aufheizung sehr lange Produktionszyklen auftreten und nur ein geringer Durchsatz erreicht werden kann.

Durch die DE 29 47 694 A1 ist ein Verfahren zur Herstellung einer metallischen Struktur, insbesondere eines Wabenkörpers eines katalytischen Konverters, zur Abgasreinigung von Brennkraftmaschinen bekannt, der aus gewickeltem Metallband besteht, bei dem das gewellte Metallband mit seinen das glatte Metallband berührenden Flächen und gegebenenfalls auch einem die beiden Metallbänder umfassenden Umschlußteil durch Sintern zu einer Baueinheit verbunden sind. Das Sintern erfolgt in einem einzigen Verfahrensschritt, bei dem eine Wärmebehandlung durchgeführt wird, deren Temperatur unterhalb des Schmelzpunktes des Werkstoffes der metallischen Struktur liegt. Eine thermische Nachbehandlung in einem zusätzlichen Verfahrensschritt, beispielsweise eine Freiglühung der Spannung, ist überflüssig.

Der vorliegenden Erfindung liegt die Aufgabe zugrunde, ein Verfahren anzugeben, durch welches der Durchsatz beim Verbinden von metallischen Strukturen, insbesondere Wabenkörpern, erhöht wird. Ferner soll das Verfahren energetisch günstiger sein, als die bisher bekannten Verfahrensweisen. Darüber hinaus sollen die Oberflächeneigenschaften der Struktur für eine spätere Beschichtung mit keramischem washcoat und katalytisch aktivem Material günstig beeinflußt werden.

Diese Aufgabe wird durch das Verfahren nach Anspruch 1 gelöst. Vorteilhafte Weiterbildungen sind Gegenstand der Unteransprüche.

Das erfindungsgemäße Verfahren zeichnet sich dadurch aus, daß die Struktur zunächst in einer Reinigungskammer unter Vakuum gereinigt wink Viele Verunreinigungen an der Oberfläche können allein durch Unterdruck beseitigt werden, so daß sie später nicht die eigentliche Prozeßkammer verschmutzen oder den Verbindungsprozeß stören. Nach der erfolgten Reinigung wird die Struktur in eine Prozeßkammer übergeführt, in der der Verbindungsvorgang durchgeführt wird. Nach Beendigung des Verbindungsvorgangs wird die Struktur in eine Abkühlkammer überführt und dort auf eine vorgegebene Temperatur abgekühlt. Ist diese vorgegebene Abkühltemperatur erreicht worden, so wird die Struktur aus der Abkühlkammer entnommen und der weiteren Verarbeitung zugeführt. An dieser Stelle sei angemerkt, daß, sofern hier von einer Struktur gesprochen wird, selbstverständlich auch an einer Vielzahl von Strukturen gleichzeitig die einzelnen Verfahrensschritte durchgeführt werden können.

Die Reinigung der Struktur erfolgt unter Vakuum. Diese Vorgehensweise hat den Vorteil, daß durch die Herabsetzung des Druckes in der Reinigungskammer an der Prozeßkammer anhaftende Verunreinigungen teilweise schnell verdampfen und eventuell weitere Verunreinigungen mit ablösen, so daß eine für den späteren Verbindungsvorgang gut vorbereitete Oberflächenbeschaffenheit entsteht.

Das Reinigen der Struktur unter Vakuum hat auch den Vorteil, daß die sich an die Reinigungskammer anschließenden Prozeßkammer für jede in die Prozeßkammer eingebrachte Charge von Strukturen nicht erneut vollständig evakuiert werden muß, da die Prozeßkammer über eine Schleuse mittelbar oder unmittelbar mit der Reinigungskammer verbunden ist. An die Prozeßkammer schließt sich eine Abkühlkammer an, in der die Struktur bis zu einer vorgegebenen Temperatur abgekühlt wird. Durch diese Verfahrensweise kann der Durchsatz erhöht werden, da die einzelnen Verfahrensschritte aufeinanderfolgend durchgeführt werden, so daß die Prozeßkammer mit einer Charge bestückt wird, während in der Abkühlkammer die vorausgehende Charge und in der Reinigungskammer die nachfolgende Charge behandelt wird. Die Prozeßkammer kommt auch nicht mit der Umgebungsatmosphäre in Kontakt, so daß die Prozeßkammer nicht immer wieder evakuiert werden muß. Ferner gelangen in die Prozeßkammer keine Verunreinigungen hinein.

Vorzugsweise wird die Struktur in der Reinigungskammer erwärmt. Hierzu wird die Reinigungskammer auf eine Temperatur von z.B. ca. 200 °C aufgeheizt. Dies hat den Vorteil, daß zum einen der Reinigungsprozeß beschleunigt wird und zum anderen die Verweilzeit der Struktur in der Prozeßkammer verkürzt werden kann, da die Struktur nunmehr nicht mehr von der Umgebungstemperatur bis zur Verbindungstemperatur, sondern von einer höheren Temperatur bis zur Verbindungstemperatur erwärmt werden muß.

Vorteilhafterweise wird die Reinigungskammer mit einem Inertgas gespült. Bei dem Inertgas kann es sich um technisch reines Argon handeln.

Die Spülung der Reinigungskammer kann mittels eines erwärmten Inertgases erfolgen. Dies hat den Vorteil, daß das Inertgas beim Durchtritt durch die Struktur diese gleichmäßiger erwärmt, als eine an den Wänden der Reinigungskammer angeordnete Heizung.

Es hat sich als vorteilhaft erwiesen, die Reinigungskammer bei einem Unterdruck zwischen 10⁻³ und 10⁻⁶, vorzugsweise bei etwa 10⁻⁵ bar zu betreiben.

Die metallische Verbindung der Blechlagen kann mit oder ohne Hilfsstoffe erfolgen. Die Verbindung der einzelnen Blechlagen kann dabei vorteilhafterweise durch Löten oder Sintern erfolgen.

Der Löt- oder Sintervorgang in der Prozeßkammer findet bei einer entsprechend den Werkstoffen angepaßten Temperatur statt. Die Temperatur in der Prozeßkammer wird zunächst bis zu einer ersten Haltetemperatur erhöht und auf dieser für eine gewisse Zeit gehalten. Hierdurch wird eine homogene Temperaturverteilung innerhalb der Charge bzw. innerhalb einer jeden Struktur erreicht. Anschließend wird die Temperatur in der Prozeßkammer bis zu einer zweiten Haltetemperatur erhöht. Die Prozeßkammer wird auf der zweiten Haltetemperatur für eine gewisse Zeit gehalten. Anschließend wird die Temperatur in der Prozeßkammer bis zur Verbindungstemperatur oberhalb von 1200 °C erhöht und auf dieser für eine gewisse Zeit gehalten.

Die Temperatur in der Prozeßkammer wird nach dem Verbindungsvorgang abgesenkt. Die Absenkung kann dadurch erfolgen, daß die Prozeßkammer zu der Abkühl- und/oder der Reinigungskammer großflächig geöffnet wird. Die Prozeßkammer gibt dann durch Wärmestrahlung Wärme an die Abkühl- und/oder Reinigungskammer ab. Hierdurch kann der Abkühlvorgang um ca. 15 Minuten verkürzt werden. Bei dieser Temperatur wird die Charge der Strukturen aus der Prozeßkammer in die Abkühlkammer überführt. In der Abkühlkammer werden die Strukturen durch Einleitung von Inertgas abgekühlt. Gleichzeitig mit der Einleitung eines Inertgases bildet sich auf den Strukturen eine Oxidationsschicht. Die Strukturen werden in der Abkühlkammer bis auf eine Temperatur von ca. 150 °C abgekühlt und anschließend aus der Abkühlkammer entnommen.

Der zeitbestimmende Prozeßschritt findet in der Prozeßkammer statt. Die Verweilzeit der Chargen in der Vorkammer bzw in der Abkühlkammer kann geringer sein als in der Prozeßkammer, so daß die Dauer der Beund Entladevorgänge die Zykluszeit des Gesamtvorganges nicht verlängert.

Weitere Vorteile und Merkmale des erfindungsgemäßen Verfahrens werden anhand eines bevorzugten Ausführungsbeispiels, auf das die Erfindung jedoch nicht beschränkt ist, beschrieben. Hierbei zeigt:

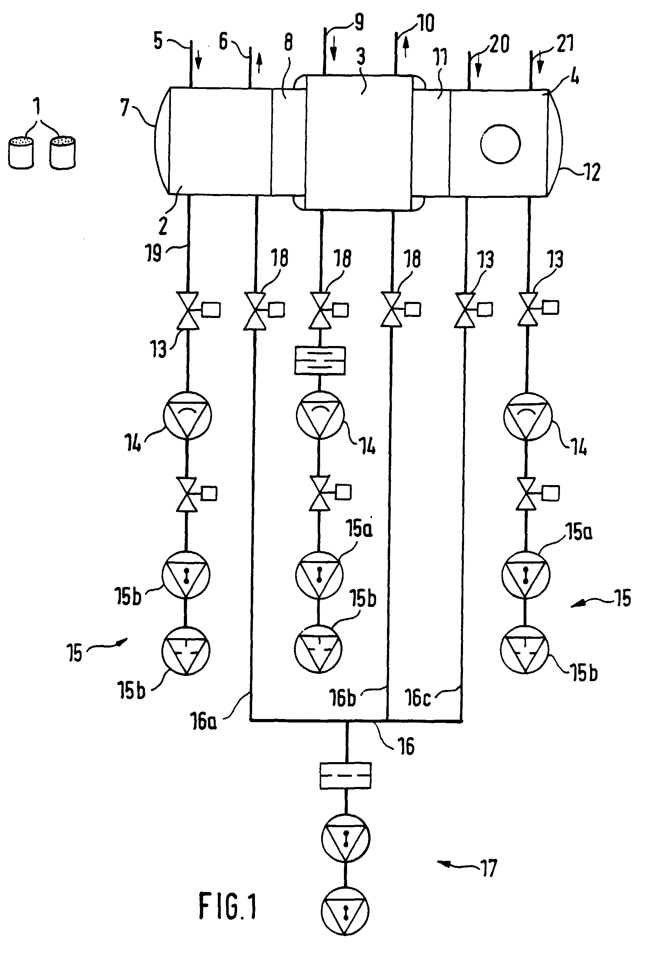

- Fig. 1: den schematischen Aufbau einer Vorrichtung zur Durchführung des Verfahrens und
- Fig. 2: den Temperaturverlauf über der Zeit in dem Vakuum-Lötofen.

Die Vorrichtung zur Durchführung des Verfahrens zur Herstellung eines Wabenkörpers eines katalytischen Konverters umfaßt eine Reinigungskammer 2, eine Prozeßkammer 3 und eine Abkühlkammer 4. Die Reinigungskammer 2 weist ein zylinderförmiges Kammergehäuse auf, welches in Form eines doppelwandigen Mantels ausgebildet ist. In den Ringraum zwischen dem doppelwandigen Mantel kann über eine Eintrittsleitung 5 ein Medium eingeleitet und über die Austrittsleitung 6 abgeleitet werden. Bei dem Medium kann es sich um Wasser handeln. Die Reinigungskammer kann mittels des Mediums gekühlt bzw. erwärmt werden.

Die Reinigungskammer 2 weist eine Beschickungstür 7 auf, welche vakuumdicht die Reinigungskammer 2 verschließt.

Die Reinigungskammer 2 ist mit der Prozeßkammer 3 über ein Zwischentürgehäuse 8 verbunden. In dem Zwischentürgehäuse 8 ist eine Tür, welche nicht weiter dargestellt ist, angeordnet, die die Reinigungskammer 2 von der Prozeßkammer 3 trennt. Die Tür kann in Form eines Schiebers ausgebildet werden. Die Tür ist so abgedichtet, daß ein Vakuumverlust gegenüber der Umgebung vermieden werden kann.

Innerhalb der Reinigungskammer 2 ist eine interne Transporteinrichtung vorgesehen, mit der eine auf einem Träger angeordnete Charge von Wabenkörpern 1 von der Reinigungskammer 2 in die Prozeßkammer 3 transportiert werden kann. Die Transportvorrichtung kann z. B. eine dreiarmige Ladegabel umfassen, die horizontal durch einen stufenlosen Hydraulikantrieb bewegt wird. Der Träger besteht aus Graphit mit einer keramischen Beschichtung. Die einzelnen Wabenkörper sind auf dem Träger stehend auf Formteilen angeordnet, die ebenfalls aus keramikbeschichtetem Graphit bestehen. Ein solcher Träger ist formstabil und temperaturbeständig. Durch die keramische Beschichtung findet auch kein Abrieb des Grafits statt.

Die Tür zwischen der Reinigungskammer 2 und der Prozeßkammer 3 kann hydropneumatisch gehoben und abgesenkt werden. Der Andruckmechanismus, welcher die Dichtheit gewährleistet, ist vorkammerseitig angeordnet.

Die Prozeßkammer 3 weist auswechselbare elektrische Heizelemente auf, die vorzugsweise in mehreren Zonen angeordnet sind. Die Prozeßkammer 3 weist eine innere Kammer auf, die vom Gehäuse der Prozeßkammer 3 umgeben ist. Zwischen der inneren Kammer der Prozeßkammer und dem Gehäuse kann über eine Zuleitung 9 und eine Ableitung 10 ein Kühlmedium eingeleitet werden, so daß die Prozeßkammer 3 gekühlt wird.

An die Prozeßkammer 3 schließt sich unter Zwischenschaltung eines Zwischentürgehäuses 11 die Abkühlkammer 4 an. Die Abkühlkammer 4 weist ein zylinderförmiges Gehäuse auf, welches doppelwandig ausgeführt wird und durch ein Medium gekühlt bzw. erwärmt wird. Die Abkühlkammer 4 ist gegenüber der Umgebung durch eine Entnahmetür 12 verschließbar. Zum Öffnen und Schließen wird die Entnahmetür 12 mittels eines elektromotorischen Antriebs seitlich verfahren.

In dem Zwischentürgehäuse 11 ist eine nicht weiter dargestellte Zwischentür, welche beispielsweise mittels eine hydropneumatischen Antriebes gehoben und abgesenkt werden kann.

Jede Kammer weist jeweils eine Einrichtung zur Erzeugung eines Vakuums auf. Die Einrichtung umfaßt ein Ventil 13, eine Diffusionspumpe 14 und einen Pumpensatz 15, welcher aus einer Vorpumpe 15a und einer Rootspumpe 15b besteht.

In der dargestellten Ausführungsform sind die Reinigungskammer 2, die Prozeßkammer 3 und die Abkühlkammer 4 über eine Pumpleitung 16 mit einem Vakuumpumpensatz 17 verbunden. In der Leitung 16a, 16b und 16c ist jeweils ein Ventil 18 angeordnet. Der Pumpensatz 17 dient der schnellen Vorevakuierung der Kammern bis zum Startdruck der jeweiligen Hochvakuum-Pumpensätze so wie min Absaugen großer Gasmengen beim Aufheizen der Charge.

Nicht dargestellt sind Meßvorrichtungen, welche das Vakuum kontrollieren.

Das Be- und Entladen der Vorrichtung erfolgt z. B. mittels eines Hubladegerätes. Hierzu wird die Beschickungstür 7 geöffnet und eine Charge von Wabenkörpern 1 in die Reinigungskammer 2 eingeführt. Anschließend wird die Beschickungstür 7 verschlossen. Die Tür zwischen der Reinigungskammer und der Prozeßkammer sowie dem Prozeßkammer 3 und der Abkühlkammer 4 sind verschlossen. Die Ventile 13 sind geschlossen. Die Ventile 17 werden geöffnet und über den Pumpensatz 18 in den Kammern 2, 3 und 4 ein Vakuum aufgebaut. Ist in den Kammern das Vorvakuum erreicht, so werden die Ventile 17 geschlossen und das Ventil 13 in der Vakuumleitung 19 zu der Reinigungskammer 2 geöffnet. Über die Diffusionspumpe 2 sowie dem Pumpensatz 15 wird das Hochvakuum in der Vorkammer 2 erzeugt.

Die Charge von Wabenkörpern 1 verbleibt in der Reinigungskammer bis der Reinigungsvorgang beendet ist. Vor dem Aufbau des Vakuums kann die Reinigungskammer 2 mit einem Inertgas gespült werden.

Ist der Reinigungsvorgang abgeschlossen, so wird die Tür im Zwischentürgehäuse 8 geöffnet und die Charge mittels interner Transportvorrichtung von der Reinigungskammer 2 in die Prozeßkammer 3 transportiert. Die Tür im Zwischengehäuse 8 wird verschlossen. Das Ventil in der Vakuumleitung 19 ist verschlossen. Die Reinigungskammer 2 kann erneut beschickt werden.

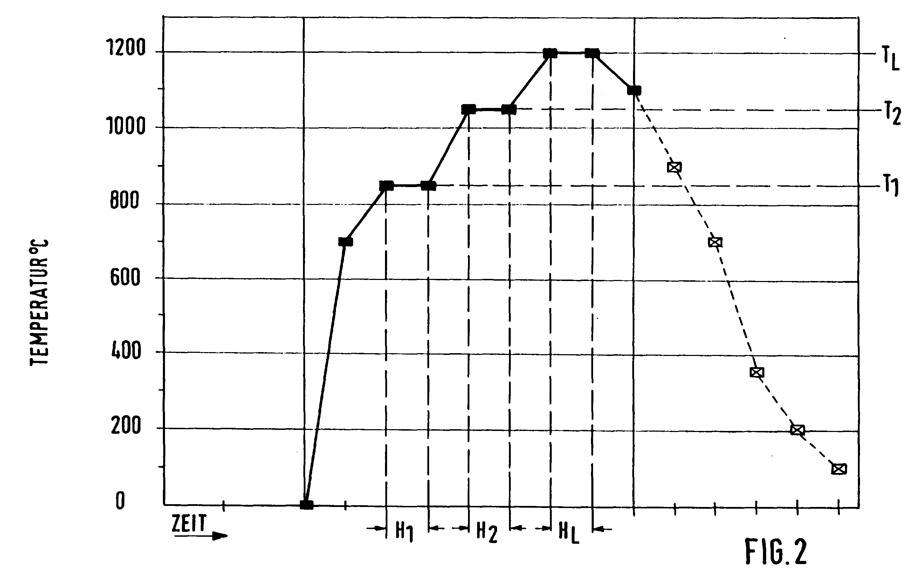

Entsprechend der Temperatursteuerung wird die Temperatur in der Prozeßkammer 3 verändert. In der Fig. 2 ist der Verlauf der Temperatur über der Zeit dargestellt.

Hat die Prozeßkammer 3 die Verbindungstemperatur T_{V} erreicht und wurde diese über eine Zeit H_{V} gehalten, so wird die Tür im Zwischengehäuse 11 geöffnet und über eine interne Transportvorrichtung die Charge in die Abkühlkammer 4 geleitet. In der Abkühlkammer 4 ist ein Unterdruck erzeugt worden, der im wesentlichen dem Unterdruck in der Prozeßkammer entspricht. Nach dem Ausbringen der Charge aus der Prozeßkammer 3 wird die Tür im Zwischentürgehäuse 11 verschlossen. Über eine Kühlmittelzu- und -ableitung 20 bzw 21 wird ein Kühlmittel in das doppelwandige Gehäuse der Abkühlkammer 4 eingeleitet und hierdurch die Charge der Wabenkörper 1 gekühlt.

Nach Erreichen einer Austrittstemperatur T_{A} wird die Entnahmetür 12 der Abkühlkammer 4 geöffnet und die Charge aus der Kammer 4 entnommen. Zwischenzeitlich ist die Temperatur des Lötofens auf die Eintrittstemperatur T_{E} abgekühlt worden. Die Abkühlkammer 4 wird nach der Entnahme der Charge verschlossen und erneut evakuiert.

In der Figur 2 ist beispielhaft der Verlauf der Temperatur über der Zeit in der Prozeßkammer sowie in der Abkühlkammer dargestellt. Die Prozeßkammer wird auf eine Temperatur T_{E} aufgeheizt. Bei dieser Temperatur wird die Charge aus der Vorkammer in die Prozeßkammer hineingebracht. Die Temperatur in der Prozeßkammer wird bis zu der ersten Haltetemperatur T₁ erhöht. Die Geschwindigkeit, mit der diese Temperatur erreicht wird, ist abhängig von der Heizleistung der Prozeßkammer. Die Prozeßkammer wird auf der Temperatur T₁ für eine Zeitspanne H₁ gehalten. Während dieser Zeit findet eine Homogenisierung der Temperatur in der Prozeßkammer statt. Anschließend wird die Temperatur in der Prozeßkammer bis zur zweiten Haltetemperatur T₂ erhöht und auf dieser für eine Zeitspanne H₂ gehalten. Schließlich wird die Temperatur in der Prozeßkammer auf die Verbindungstemperatur, die oberhalb von 1200 °C liegen kann, erhöht. Die Prozeßkammer wird bei dieser Temperatur T_{V} für eine Zeitspanne H_{V} betrieben. Nach Ablauf der Zeit H_{V} wird die Heizung der Prozeßkammer abgestellt und die Verbindung zur Abkühlkammer freigegeben. Die Temperatur in der Prozeßkammer sinkt hierdurch rapide bis zu einer Temperatur T₃. In der Figur 2 ist gestrichelt der Verlauf der Temperatur in der Abkühlkammer dargestellt. Der Temperaturverlauf in der Abkühlkammer ist nicht gesteuert. Dieser ergibt sich durch die Einleitung eines Schutzgases und die Umwälzung des Schutzgases in der Abkühlkammer mittels eines Ventilators. Ist in der Abkühlkammer eine Temperatur von ca. 150 °C erreicht worden, so kann die Charge entnommen werden.

### BEZUGSZEICHENLISTE

- 1: Struktur
- 2: Reinigungskammer
- 3: Prozeßkammer
- 4: Abkühlkammer
- 5: Eintrittsleitung
- 6: Austrittsleitung
- 7: Beschickungstür
- 8: Zwischentürgehäuse
- 9: Zuleitung
- 10: Ableitung
- 11: Zwischentürgehäuse
- 12: Entnahmetür
- 13: Ventil
- 14: Diffusionspunpe
- 15: Pumpensatz
- 15a: Pumpensatz
- 15b: Rootspumpe
- 16: Pumpenleitung
- 16a, b, c: Leitung
- 17: Pumpensatz

## Patentansprüche

1. Verfahren zur Herstellung einer metallischen Struktur, insbesondere eines Wabenkörpers, insbesondere für einen katalytischen Konverter, aus zumindest teilweise strukturierten gewickelten, verschlungenen oder geschichteten Blechlagen,
**umfassend folgende Schritte:**
- Reinigen der Struktur (1) unter Vakuum in einer Reinigungskammer (2);
- Überführen der Struktur (1) in eine Prozeßkammer (3);
- Durchführung eines Prozesses zur metallischen Verbindung der Blechlagen mit oder ohne Hilfsstoffe unter Vakuum;
- Überführung der Struktur (1) in eine Abkühlkammer (4);
- Abkühlen der Struktur (1) unter Vakuum in der Abkühlkammer (4) bis zu einer vorgegebenen Temperatur.

2. Verfahren nach Anspruch 1, dadurch gekennzeichnet, daß die Struktur (1) in der Reinigungskammer (2) erwärmt wird.

3. Verfahren nach Anspruch 1 oder 2, dadurch gekennzeichnet, daß die Reinigungskammer (2) mit einem Inertgas gespült wird.

4. Verfahren nach Anspruch 3, dadurch gekennzeichnet, daß die Reinigungskammer (2) mit einem erwärmten Inertgas gespült wird.

5. Verfahren nach Anspruch 1, dadurch gekennzeichnet, daß in der Reinigungskammer (2) ein Unterdruck zwischen 10⁻³ und 10⁻⁶ bar, vorzugsweise etwa 10⁻⁵ bar erzeugt wird.

6. Verfahren nach Anspruch 2, dadurch gekennzeichnet, daß die Reinigungskammer auf eine Temperatur von ca. 200 °C erwärmt wird.

7. Verfahren nach Anspruch 1, dadurch gekennzeichnet, daß die Temperatur (T) in der Prozeßkammer (3) entsprechend einem vorgegebenen Temperaturverlauf angepaßt wird.

8. Verfahren nach Anspruch 7, dadurch gekennzeichnet, daß die Temperatur (T) in der Prozeßkammer (3) zunächst bis zu einer ersten Haltetemperatur (T₁) auf der diese eine Zeit (H₁) gehalten wird, danach die Temperatur (T) auf eine zweite Haltetemperatur (T₂) erreicht und auf dieser für eine Zeit (H₂) gehalten wird, anschließend die Temperatur (T) bis zur Verbindungstemperatur (T_{V}) erhöht und eine Zeit (H_{V}) gehalten wird und anschließend die Temperatur (T_{A}) abgesenkt wird.

9. Verfahren nach Anspruch 8, dadurch gekennzeichnet, daß die Temperatur (T) in der Prozeßkammer (3) nach dem Verbindungsvorgang teilweise durch Verbinden der Prozeß- mit der Abkühlkammer (3; 4) abgesenkt wird.

10. Verfahren nach einem oder mehreren vorstehenden Ansprüchen, dadurch gekennzeichnet, daß die Struktur (1) in der Abkühlkammer (4) auf eine Temperatur von ca. 150 °C abgekühlt werden.

11. Verfahren nach einem oder mehreren vorstehenden Ansprüchen, dadurch gekennzeichnet, daß in die Abkühlkammer (4) ein Inertgas ein- und abgeleitet wird.

12. Verfahren nach einem oder mehreren vorstehenden Ansprüchen, dadurch gekennzeichnet, daß die metallische Verbindung durch Löten erfolgt.

13. Verfahren nach einem oder mehreren vorstehenden Ansprüchen 1 bis 12, dadurch gekennzeichnet, daß die metallische Verbindung durch Sintern erfolgt.

14. Vorrichtung zum metallischen Verbinden der Blechlagen einer metallischen Struktur, insbesondere eines Wabenkörpers, untereinander und/oder mit einem metallischen Gehäuse umfassend:
- eine Reinigungskammer (2),
- einen Prozeßkammer (3), der mit der Reinigungskammer (2) verbindbar ist,
- eine Abkühlkammer (4), die mit der Prozeßkammer (3) verbindbar ist, und
- wenigstens eine Unterdruckerzeugungseinrichtung, mittels derer in der Prozeß-, der Reinigungs- und der Abkühlkammer (2; 3; 4) ein Unterdruck erzeugbar ist.

15. Vorrichtung nach Anspruch 14, dadurch gekennzeichnet, daß die Prozeßkammer (3) durch jeweils eine Schleuse mit der Reinigungskammer (2) und/oder der Abkühlkammer (4) verbindbar ist, wobei der Unterdruck gegenüber der Außenatmosphäre zumindest teilweise erhalten bleibt.

## Claims

1. A process for the production of a metallic structure, in particular a honeycomb body, in particular for a catalytic converter, comprising at least partially structured wound, twisted or stacked sheet metal layers,
including the following steps:
- cleaning the structure (1) under vacuum in a cleaning chamber (2);
- transferring the structure (1) into a process chamber (3):
- carrying out a process for metallically connecting the sheet metal layers with or without additives under vacuum;
- transferring the structure (1) into a cooling chamber (4); and
- cooling the structure (1) under vacuum in the cooling chamber (4) to a predetermined temperature.

2. A process according to claim 1 characterised in that the structure (1) is heated in the cleaning chamber (2).

3. A process according to claim 1 or claim 2 characterised in that the cleaning chamber (2) is flushed with an inert gas.

4. A process according to claim 3 characterised in that the cleaning chamber (2) is flushed with a heated inert gas.

5. A process according to claim 1 characterised in that a reduced pressure of between 10⁻³ and 10⁻⁶ bars, preferably about 10⁻⁵ bars, is produced in the cleaning chamber (2).

6. A process according to claim 2 characterised in that the cleaning chamber is heated to a temperature of about 200°C.

7. A process according to claim 1 characterised in that the temperature (T) in the process chamber (3) is adapted to correspond to a predetermined temperature configuration.

8. A process according to claim 7 characterised in that the temperature (T) in the process chamber (3) is initially raised to a first holding temperature (T₁) at which it is held for a time (H₁), thereafter the temperature (T) is raised to a second holding temperature (T₂) and held at that temperature for a time (H₂), then the temperature (T) is raised to the connecting temperature (T_{V}) and held for a time (H_{V}), and then the temperature (T_{A}) is reduced.

9. A process according to claim 8 characterised in that the temperature (T) in the process chamber (3) is reduced after the connecting operation in part by connecting the process chamber (3) to the cooling chamber (4).

10. A process according to one or more of the preceding claims characterised in that the structure (1) is cooled in the cooling chamber (4) to a temperature of about 150°C.

11. A process according to one or more of the preceding claims characterised in that an inert gas is passed into and out of the cooling chamber (4).

12. A process according to one or more of the preceding claims characterised in that the metallic connection is effected by brazing.

13. A process according to one or more of preceding claims 1 to 12 characterised in that the metallic connection is effected by sintering.

14. Apparatus for metallically connecting the sheet metal layers of a metallic structure, in particular a honeycomb body, to each other and/or to a metallic housing including:
- a cleaning chamber (2).
- a process chamber (3) which can be connected to the cleaning chamber (2).
- a cooling chamber (4) which can be connected to the process chamber (3), and
- at least one reduced pressure-producing means, by means of which a reduced pressure can be produced in the process, cleaning and cooling chambers (2; 3; 4).

15. Apparatus according to claim 14 characterised in that the process chamber (3) can be connected by a respective lock device to the cleaning chamber (2) and/or the cooling chamber (4), the reduced pressure being at least partially maintained in relation to the outside atmosphere.

## Revendications

1. Procédé pour fabriquer une structure métallique, notamment un corps en nid d'abeille, notamment pour un convertisseur catalytique, constitué par des couches de tôle enroulées, entrelacées ou stratifiées et au moins partiellement structurées,
comprenant les étapes opératoires suivantes :
- nettoyage de la structure (1) sous vide dans une chambre de nettoyage (2);
- transfert de la structure (1) dans une chambre de traitement (3);
- exécution d'un procédé pour établir la liaison métallique des couches de tôle avec ou sans substances auxiliaires, sous vide;
- transfert de la structure (1) dans une chambre de refroidissement (4);
- refroidissement de la structure (1) sous vide dans la chambre de refroidissement (4) jusqu'à ce qu'elle ait atteint une température prédéterminée.

2. Procédé selon la revendication 1, caractérisé en ce qu'on chauffe la structure (1) dans la chambre de nettoyage (2).

3. Procédé selon la revendication 1 ou 2, caractérisé en ce qu'on applique à la chambre de nettoyage (2) un balayage au moyen d'un gaz inerte.

4. Procédé selon la revendication 3, caractérisé en ce qu'on applique à la chambre de nettoyage (2) un balayage avec un gaz inerte chauffé.

5. Procédé selon la revendication 1, caractérisé en ce qu'on produit dans la chambre de nettoyage (2) une dépression comprise entre 10⁻³ à 10⁻⁶ bar et égale de préférence à environ 10⁻⁵ bar.

6. Procédé selon la revendication 1, caractérisé en ce qu'on chauffe la chambre de nettoyage à une température d'environ 20°C.

7. Procédé selon la revendication 1, caractérisé en ce qu'on adapte la température (T) présente dans la chambre de traitement (3) en fonction d'une allure prédéterminée de la température.

8. Procédé selon la revendication 7, caractérisé en ce que la température (T) dans la chambre de traitement (3) atteint tout d'abord une première température de maintien (T₁) et est maintenue à cette valeur pendant un intervalle de temps (H₁), puis la température (T) atteint une seconde température de maintien (T₂) et est maintenue à cette valeur pendant un intervalle de temps (H₂), ensuite la température (T) augmente jusqu'à la température de liaison (T_{V}) est maintenue pendant un intervalle de temps (H_{V}), et ensuite la température (T_{A}) est réduite.

9. Procédé selon la revendication 8, caractérisé en ce que la température (T) dans la chambre de traitement (3) est réduite partiellement, après le processus de liaison, par réunion de la chambre de traitement et de la chambre de refroidissement (3;4).

10. Procédé selon une ou plusieurs des revendications précédentes, caractérisé en ce que la structure (1) est refroidie, dans la chambre de refroidissement (3) à une température d'environ 150°C.

11. Procédé selon une ou plusieurs des revendications précédentes, caractérisé en ce qu'un gaz inerte est introduit dans la chambre de refroidissement (4) et en est évacué.

12. Procédé selon une ou plusieurs des revendications précédentes, caractérisé en ce que la liaison métallique s'effectue par brasage.

13. Procédé selon une ou plusieurs des revendications précédentes 1 à 12, caractérisé en ce que la liaison métallique est réalisée par frittage.

14. Dispositif pour réaliser la liaison métallique des couches de tôle d'une structure métallique, notamment d'un corps en nid d'abeilles, les unes aux autres et/ou à un boîtier métallique, comprenant :
- une chambre de nettoyage (2);
- une chambre de traitement (3), qui peut être reliée à la chambre de nettoyage (2),
- une chambre de refroidissement (4), qui peut être reliée à la chambre de traitement (3), et
- au moins un dispositif de production d'une dépression, à l'aide duquel une dépression peut être produite dans la chambre de traitement, dans la chambre de nettoyage et dans la chambre de refroidissement (2;3;4).

15. Dispositif selon la revendication 14, caractérisé en ce que la chambre de traitement (3) peut être reliée respectivement par un sas à la chambre de nettoyage (2) et/ou la chambre de refroidissement (4), la dépression étant au moins partiellement obtenue par rapport à l'atmosphère extérieure.
